# EUROPEAN PATENT APPLICATION

(11) **EP 3 574 996 A1**
(43) Date of publication of application: **04.12.2019**
(21) Application number: 18212011.3
(22) Date of filing: 12.12.2018
(51) Int. Cl.: B01J 37/03, B01J 37/16, B01J 23/66, B01J 37/00, C01B 15/029, C22C 5/00

(54) **CATALYST CONTAINING AU-PT ALLOY, METHOD FOR PREPARING THEREOF AND METHODS FOR SYNTHESIZING OF HYDROGEN PEROXIDE USING THE SAME**

(30) Priority: 01.06.2018 KR 20180063815
(71) Applicant: Korea Institute of Science and Technology, Seoul 02792 (KR)
(72) Inventor: LEE, Seung Yong, 02792 Seoul (KR); HAN, Sang Soo, 02792 Seoul (KR); NAM, Hyo Bin, 02792 Seoul (KR); LEE, Hong Woo, 02792 Seoul (KR); CHO, So Hye, 02792 Seoul (KR); JANG, Ho Seong, 02792 Seoul (KR)
(74) Representative: Valea AB

(57) **Abstract**

A catalyst, a method for preparing thereof, and methods for synthesizing of hydrogen peroxide are disclosed. The catalyst contains an alloy of two elements. Herein, the elements are Au(Aurum, i.e. gold) and Pt(Platinum). The method for preparing the catalyst containing the Au-Pt alloy, includes steps of: (a) obtaining a first solution by dissolving dispersing agent and reducing agent into a first solvent; and (b) synthesizing the Au-Pt alloy by adding Au precursor and Pt precursor into the first solution. Herein, the step (b) includes steps of: (b-1) obtaining a second solution by dissolving the Au precursor and the Pt precursor into a second solvent; and (b-2) synthesizing the Au-Pt alloy by adding the second solution into the first solution.

## Description

The present disclosure relates to a catalyst; and more particularly, to the catalyst, containing: an alloy of two elements, wherein the elements are Au(Aurum, i.e. gold) and Pt(Platinum); a method for preparing thereof; and methods for synthesizing of hydrogen peroxide using the same. For reference, a government research and development project on future materials is being carried out by the applicant, Korea Institute of Science and Technology (KIST), from February 1, 2018 to January 31, 2019. Herein, a subject of the government research and development project on future materials is quantum alchemy catalyst development.

In various industries such as pulp and paper manufacturing, fiber, water treatment, compounds manufacturing, petrochemistry and semiconductors, etc., Hydrogen peroxide (H₂O₂) is used as polish, disinfectants, oxidants, and fuels, etc. The production of the hydrogen peroxide is increasing every year, and according to Transparency Market Research, the global market size of the hydrogen peroxide is expected to reach approximately six billion dollars by 2023. A formula for direct synthesis reaction of the hydrogen peroxide from hydrogen and oxygen may be simple, however, a commercialization process has not been developed because the reaction is difficult to achieve. The global market size is expected to grow gradually through replacing the conventional inefficient synthesizing process of the hydrogen peroxide with an eco-friendly thereof.

Meanwhile, a palladium(Pd) catalyst, which exhibits high activity on the synthesis reaction of the hydrogen peroxide, is being widely used. However, a spotlight on palladium in industries of car and energy, etc., has caused a price of the palladium to increase as much as 50% in December 2017 compared to early 2017. Anglo American plc, a multinational mining company, expected that the increase in a demand for the Pd will greatly exceed the increase in a supply of the Pd for next three to five years. Accordingly, it is necessary to develop a new catalyst for the direct synthesizing of the hydrogen peroxide to meet the demand of the rapidly growing global market of the hydrogen peroxide.

It is an object of the present disclosure to solve all the aforementioned problems.

It is another object of the present disclosure to replace a palladium(Pd) catalyst with a new high-active catalyst.

It is still another object of the present disclosure to provide a solid solution of Au(Aurum, i.e. gold) and Pt(Platinum), which have originally immiscible properties, and provide a method for preparing the solid solution.

It is still yet another object of the present disclosure to provide a method for direct synthesis of the hydrogen peroxide by using the new catalyst.

In accordance with one aspect of the present disclosure, there is provided a catalyst, containing: an alloy of two elements, wherein the elements are Au(Aurum, i.e. gold) and Pt(Platinum) .

As one example, the alloy forms solid solution.

As one example, the alloy has a face-centered tetragonal structure.

As one example, the alloy catalyzes direct synthesis reaction of the hydrogen peroxide (H₂O₂).

As one example, a molecular formula of the alloy is represented as Au_{X}Pt_{(100-X)}, wherein the X satisfies no less than 22 and no more than 97.

As one example, a molecular formula of the alloy is represented as Au_{X}Pt_{(100-X)}, wherein the X satisfies no less than 27 and no more than 97.

In accordance with another aspect of the present disclosure, there is provided a method for preparing a catalyst with the Au-Pt alloy, including steps of: (a) obtaining a first solution by dissolving dispersing agent and reducing agent into a first solvent; and (b) synthesizing the Au-Pt alloy by adding Au precursor and Pt precursor into the first solution.

As one example, the step (b) includes steps of: (b-1) obtaining a second solution by dissolving the Au precursor and the Pt precursor into a second solvent; and (b-2) synthesizing the Au-Pt alloy by adding the second solution into the first solution.

As one example, at the step of (b-2), the second solution is allowed to be dropped into the first solution.

As one example, the step (b) is carried out at a temperature near 0°C.

As one example, the reducing agent contains one or more substances selected from a group of NaBH₄ (Sodium Borohydride), Butyllithium, and Ascorbic Acid.

As one example, the dispersing agent contains one or more substances selected from a group of PVP(Polyvinylpyrrolidone), Oleylamine, and CTAB.

As one example, the Au-Pt alloy forms solid solution.

As one example, the Au-Pt alloy catalyzes direct synthesis reaction of the hydrogen peroxide (H₂O₂).

As one example, the method further includes a step of: (c) washing the Au-Pt alloy synthesized at the step of (b).

In accordance with still another aspect of the present disclosure, there is provided a method for synthesizing hydrogen peroxide, wherein the hydrogen peroxide is synthesized by using the Au-Pt catalyst.

The drawings attached below are to explain example embodiments of the present disclosure and are only part of preferred embodiments of the present disclosure. Other drawings may be obtained based on the drawings herein without inventive work for those skilled in the art. The above and other objects and features of the present disclosure will become apparent from the following description of preferred embodiments given in conjunction with the accompanying drawings, in which:
Fig. 1 includes HAADF(High-angle Annular Dark Field)-STEM(Scanning Transmission Electron Microscope) images of Au-Pt alloy in accordance with one example embodiment of the present disclosure.
Fig. 2A is an exemplary diagram for illustrating a crystal structure of the Au-Pt alloy in accordance with one example embodiment of the present disclosure.
Fig. 2B is an exemplary diagram for illustrating a simulated-XRD result of the Au-Pt alloy in accordance with one example embodiment of the present disclosure.
Fig. 3 is an exemplary diagram for illustrating XRD results per each of atomic ratios of Au and Pt in Au-Pt catalyst in accordance with one example embodiment of the present disclosure.
Fig. 4 is a table for illustrating respective amounts of synthesized hydrogen peroxide per each of the atomic ratios of the Au-Pt catalyst in accordance with one example embodiment of the present disclosure.
Fig. 5 is a graph for illustrating reaction coordinates in synthesizing process of the hydrogen peroxide using the Au-Pt catalyst in accordance with one example embodiment of the present disclosure.
Fig. 6 is a graph for illustrating reaction coordinates in synthesizing process of the hydrogen peroxide using Pd catalyst according to a comparative example as a conventional art.

To make purposes, technical solutions, and advantages of the present disclosure clear, reference is made to the accompanying drawings that show, by way of illustration, more detailed example embodiments in which the disclosure may be practiced. These preferred embodiments are described in sufficient detail to enable those skilled in the art to practice the disclosure.

It is to be appreciated that the various embodiments of the present disclosure, although different, are not necessarily mutually exclusive. For example, a particular feature, structure, or characteristic described herein in connection with one embodiment may be implemented within other embodiments without departing from the spirit and scope of the present disclosure. In addition, it is to be appreciated that the position or arrangement of individual elements within each disclosed embodiment may be modified without departing from the spirit and scope of the present disclosure. The following detailed description is, therefore, not to be taken in a limiting sense, and the scope of the present disclosure is defined only by the appended claims, appropriately interpreted, along with the full range of equivalents to which the claims are entitled. In the drawings, like numerals refer to the same or similar functionality throughout the several views.

Hereinafter, preferred embodiments of the present disclosure will be described in detail with reference to the accompanying drawings so that those skilled in the art may easily implement the present disclosure.

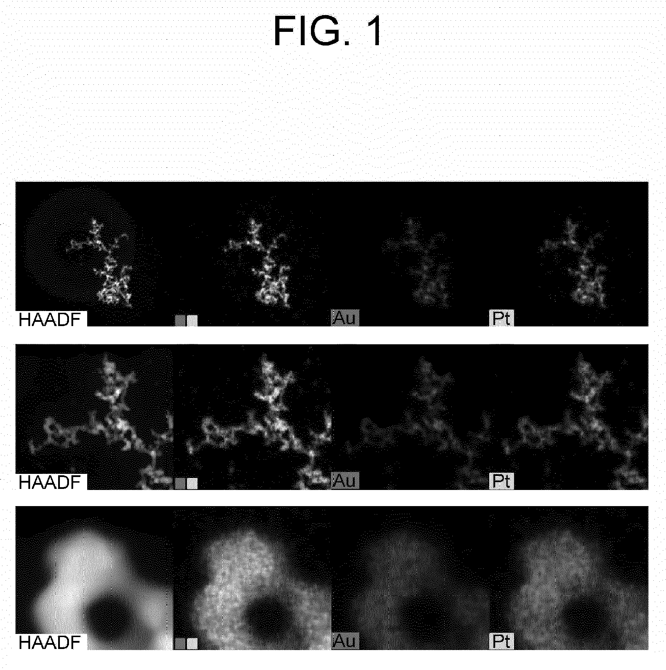

Referring to Fig. 1, a catalyst may contain an alloy of two elements. Herein, the elements are Au(Aurum, i.e. gold) and Pt(Platinum). In detail, the Au-Pt alloy may form solid solution where particles of Au and particles of Pt are uniformly distributed.

Specifically, Fig. 1 includes HAADF(High-angle Annular Dark Field)-STEM(Scanning Transmission Electron Microscope) images of the Au-Pt alloy in accordance with one example embodiment of the present disclosure. Herein, the HAADF-STEM images were obtained by Talos F200X manufactured by FEI Company at an accelerating voltage of 200kV.

Further, mapping images, shown in Yellow, Green, and Red, generated from the HAADF-STEM images by using EDS(Energy Dispersive Spectrometer), may be illustrated. Specifically, the mapping images may include images of the Au-Pt alloy in Yellow, those of the Pt in Green and those of the Au in Red. Herein, the mapping images were obtained by Super-X EDS SYSTEM manufactured by Bruker Corporation at a measurement range of 0∼40kV.

Analyzing the images of the Au-Pt alloy, Fig. 1 exhibits the characteristics of the Au-Pt alloy. In detail, by referring to the mapping images of the Au-Pt alloy in Yellow, it is observed that the mapping images of the Pt in Green and those of the Au in Red exhibit uniform distribution of the Pt and the Au. That is, the Pt atoms and the Au atoms are uniformly distributed in one or more particles of the Au-Pt alloy.

Next, the Au-Pt alloy in the present disclosure may have a face-centered tetragonal structure (L1₀), but it is not limited thereto.

Specifically, the L1₀ structure among the crystal structures per various atomic ratios of the Au-Pt alloy, which contain miscible mixture of the Au and the Pt, was stable for its thermodynamically lowest energy value according to results of quantum computation.

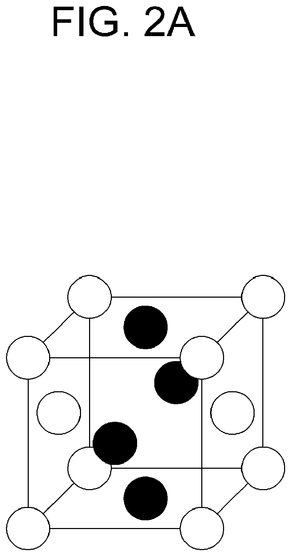

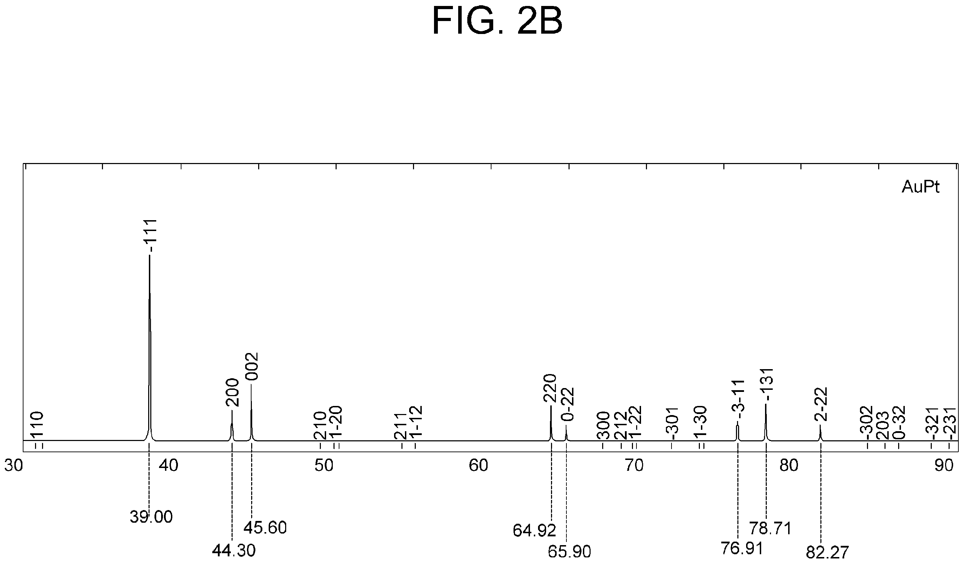

Fig. 2A illustrates the L1₀ structure of the Au-Pt alloy(Au:Pt=50:50) in the present disclosure and Fig. 2B illustrates a simulated-XRD result of the Au-Pt alloy corresponding to the structure. Herein, PowderCell 2.4 using Cu K-alpha radiation (1.5406 nm) was used.

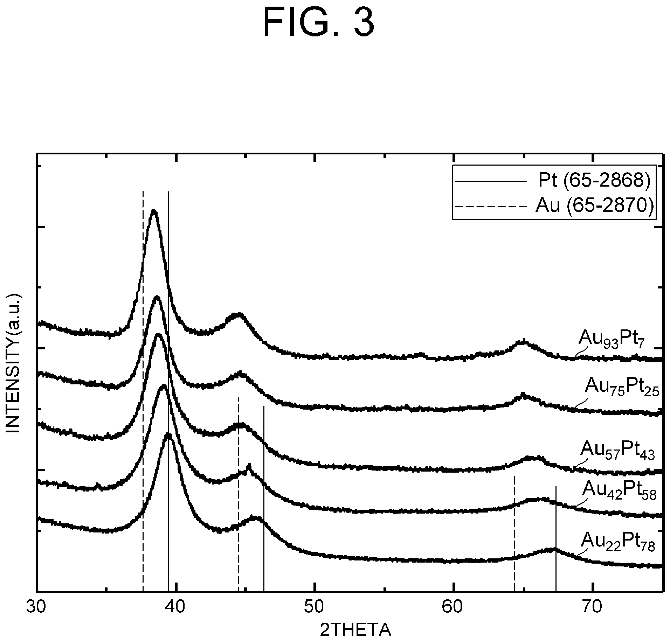

Fig. 3 illustrates results of XRD per each of atomic ratios of the Au-Pt alloy which were obtained from bottom-up synthesizing in accordance with the present disclosure. Herein, the results of the XRD were obtained by Smartlab manufactured by Rigaku Corporation. In detail, the XRD included fixed samples, a moving director, and a moving X-ray tube operating at 45kV and 200mA. Further, measurement was carried out per 0.75°/min by using Cu K-alpha radiation in 2-theta range of 30-70 degree.

Referring to Fig. 2B, the simulated-XRD result shows a new type of XRD peaks for the Au-Pt alloy (Au:Pt=50:50). Comparing Fig. 2B with Fig. 3, it is shown that XRD peaks per each of the atomic ratios of the Au-Pt alloy(from Au₂₂Pt₇₈ to Au₉₃Pt₇) in Fig. 3 are similar to the XRD peaks for the Au-Pt alloy (Au:Pt=50:50) in the Fig. 2B. Through this comparison, it is confirmed that each of the atomic ratios of the Au-Pt alloy (from Au₂₂Pt₇₈ to Au₉₃Pt₇) synthesized in the present disclosure may also have the L1₀ structure.

Next, the Au-Pt alloy in the present disclosure may catalyze direct synthesis reaction of hydrogen peroxide(H₂O₂).

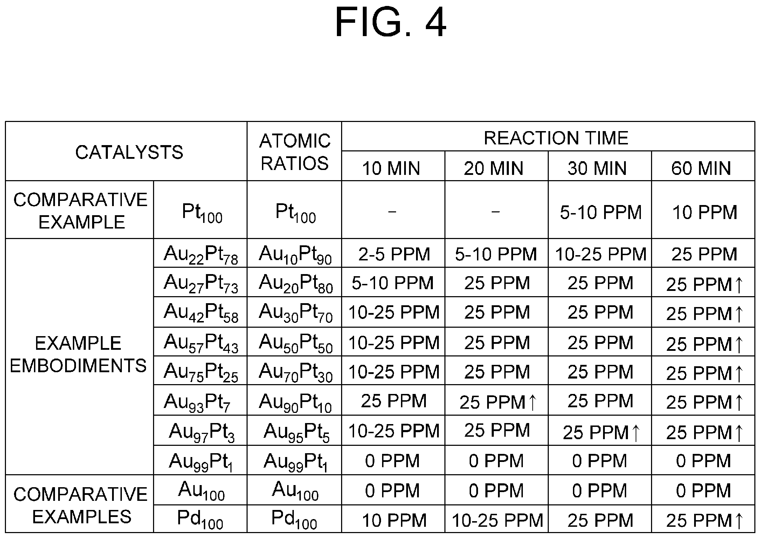

Fig. 4 illustrates respective amounts of synthesized hydrogen peroxide per each of the atomic ratios of the Au and the Pt in Au-Pt catalyst in accordance with one example embodiment of the present disclosure.

Experiments on the direct synthesis reaction of the hydrogen peroxide were conducted per each of the atomic ratios to assess the catalyst characteristics of the Au-Pt catalyst.

More specifically, the experiments for synthesizing the hydrogen peroxide may include processes of: (a) obtaining colloidal solution where 0.032mg alloy catalyst blended with 2mL solution containing 1.5973mL water, 0.4mL ethanol, 0.0027mL phosphoric acid(85%), and 0.16mg NaBr; (b) pumping a gas bubble (4%H₂ in Ar 50mL/min, O₂ 20mL/min; H₂:O₂=10:1) into the colloidal solution by 70mL/min and then measuring the amounts of the hydrogen peroxide per each of the atomic ratios.

Herein, the direct synthesis reaction of the hydrogen peroxide was conducted for 10, 20, 30, and 60 minutes, by using the Au-Pt catalyst with the respective atomic ratios. Strips which change their colors depending on the amounts of the hydrogen peroxide were used for measuring the amounts of the hydrogen peroxide per each of the atomic ratios. The respective results of the amounts of the synthesized hydrogen peroxide are illustrated in Fig. 4.

The activities of Au₂₂Pt₇₈, Au₂₇Pt₇₃, Au₄₂Pt₅₈, Au₅₇Pt₄₃, Au₇₅Pt₂₅, Au₉₃Pt₇, Au₉₇Pt₃, and Au₉₉Pt₁ were measured as example embodiments, and the activities of Pt₁₀₀, Au₁₀₀, and Pd₁₀₀ were measured as comparative examples.

Compared to results that the Au₁₀₀ did not affect the synthesis of the Hydrogen Peroxide and results that the amounts of the synthesized hydrogen peroxide with the Pt₁₀₀ catalyst were 5-10ppm after 30 minutes of reaction time, the activities per each of the atomic ratios of the Au-Pt catalyst (AuₓPt_{(100-X)}) in accordance with the example embodiments of the present disclosure surpassed the activities of the Pd₁₀₀ catalyst when the X satisfied values same as or larger than 22. Also, the activities of the Au-Pt catalyst surpassed the activities of the Pd₁₀₀ catalyst when the X satisfied 97, even though there was large amount of the Au which does not contribute to the synthesis of the Hydrogen Peroxide if left alone.

Compared to the results that the amounts of the synthesized hydrogen peroxide with the Pd₁₀₀ catalyst were 10ppm after 10 minutes of the reaction time, 10-25ppm after 20 minutes thereof, 25ppm after 30 minutes thereof, and 25ppm after 60 minutes thereof, the Au-Pt catalyst exhibited similar or higher activities when the X satisfied no less than 27 and no more than 97.

Particularly, the Au-Pt catalyst exhibited distinctly higher activities than the Pd₁₀₀ catalyst over all reaction times, e.g., 10 minutes, 20 minutes, 30 minutes, and 60 minutes, when the X satisfied no less than 42 and no more than 97. Further, the Au-Pt catalyst exhibited far higher activities than the Pd₁₀₀ catalyst after 10 and 20 minutes of the reaction time, when X satisfied 93.

That is, a high-efficient catalyst that can replace the Pd catalyst is newly obtained in accordance with the above-stated experiments by synthesizing the Au and the Pt, even though the Au alone does not affect the synthesis of the Hydrogen Peroxide and the Pt has lower activity on the synthesis of the Hydrogen Peroxide than the Pd does.

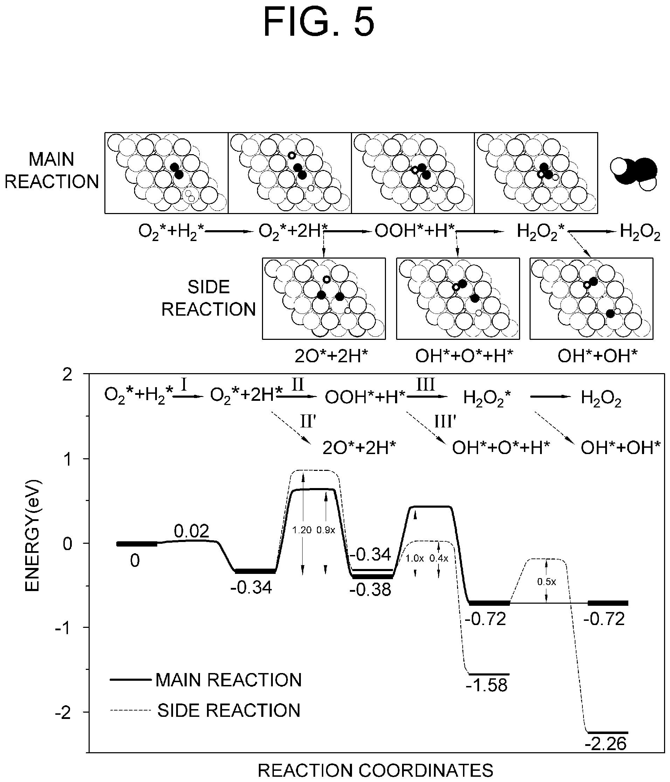

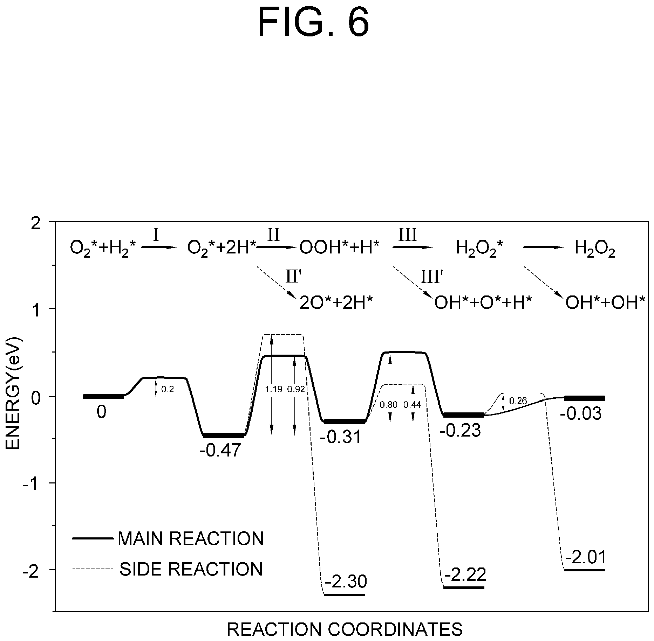

The high activity of the Au-Pt catalyst in accordance with the present disclosure can also be confirmed by energy analysis of reaction pathway of the Au-Pt and the Pd. Detailed explanation on the analysis will be made by referring to Fig. 5 and Fig. 6.

Fig. 5 is a graph for illustrating reaction coordinates in synthesizing process of the hydrogen peroxide using the Au-Pt catalyst in accordance with one example embodiment of the present disclosure. Also, Fig. 6 is a graph for illustrating reaction coordinates in the synthesizing process of the hydrogen peroxide using the Pd catalyst according to a comparative example as a conventional art. In the Figures, marked spheres among small spheres represent oxygen atoms, and blank spheres among the small spheres represent hydrogen atoms. Herein, line thicknesses for the blank spheres among the small spheres differ from each other so as to identify different locations of the respective dissociated hydrogen atoms.

A formula for direct synthesis reaction of the hydrogen peroxide from hydrogen and oxygen may be simple, however, a commercialization process has not been developed because the reaction is difficult to achieve. To directly synthesize the hydrogen peroxide, a catalyst should dissociate the hydrogen atoms and restrain dissociation of the oxygen atoms while making the oxygen atoms adsorbed onto the surface. The Pd catalyst is conventionally well known for its performance as a catalyst used for synthesizing the hydrogen peroxide. However, the Au-Pt catalyst may also be a competent catalyst for synthesizing the hydrogen peroxide in accordance with the present disclosure. In detail, an energy barrier for O₂ in the Au-Pt catalyst is 0.77eV and the energy barrier for H₂ in the Au-Pt catalyst is 0.02eV, which is far lower than 0.77eV. That is, the Au-Pt catalyst may dissociate the hydrogen atoms while restraining the dissociation of the oxygen atoms.

Further, by referring to Fig. 5 and Fig. 6, since the energy barrier for the H₂ in the Pd catalyst is 0.20eV, which is much higher than 0.02eV, it is easy for the Au-Pt catalyst to proceed to a step I, i.e., O₂*+H₂* →- O₂*+2H*, of the direct synthesis reaction of the hydrogen peroxide compared to the Pd catalyst. Furthermore, each step of the Au-Pt catalyst illustrated in Fig. 5 shows thermodynamically exothermic reaction. On the other hand, each step except for the step I of the Pd catalyst illustrated in Fig. 6 shows thermodynamically endothermic reaction. Thus, if respective energies of reactants are compared with those of corresponding products in Figs. 5 and 6, reactions using the Au-Pt catalyst are more stable than those using the Pd catalyst. That is, it is expected that the Au-Pt catalyst may exhibit a high productivity of the hydrogen peroxide than the Pd does.

Meanwhile, by referring to a step II', i.e., O₂*+2H* → 2O*+2H*, from side reaction of the Pd catalyst illustrated in Fig. 6, it is shown that the 2O*+2H* structure has the most stable energy value of -2.30eV. On the other hand, by referring to the step II' from the side reaction of the Au-Pt catalyst illustrated in Fig. 5, the side reaction may hardly occur because the 2O*+2H* structure has a highly unstable energy value of -0.34eV due to the distribution of the Au atoms on the periphery of the Pt atoms. Further, the energy value of the 2O*+2H* structure in the step II' from the side reaction of the Au-Pt catalyst is even higher than that of OOH*+H* structure in a step II, i.e., 2O*+2H* → OOH*+H*, from main reaction, which is -0.38eV.

Similarly, by referring to a step III', i.e., OOH*+H* → OH*+O*+H*, from the side reaction of the Pd catalyst in Fig. 6, the OH*+O*+H* structure has an energy value of -2.22 eV. On the other hand, by referring to the step III' from the side reaction of the Au-Pt catalyst in Fig. 5, the OH*+O*+H* structure has an unstable energy value of -1.58eV. Thus, the side reaction of the Au-Pt catalyst may hardly occur compared to that of the Pd catalyst.

In conclusion, it is confirmed that the Au-Pt catalyst exhibits higher activity than the Pd catalyst by referring to the energy analysis of the reaction pathway.

Meanwhile, the direct synthesis reaction of the hydrogen peroxide may more easily occur on the periphery of the Pt atoms of the Au-Pt alloy. Since the Au has high energy barrier for the H₂, it is easy for the H₂ to be adsorbed onto the Au-Pt catalyst and then to be dissociated into 2H. Also, Pt-Pt Bridge is the most profitable location for each of the dissociated hydrogen atoms in order to achieve the most stable energy level.

Next, a method for preparing the catalyst containing the Au-Pt alloy may be provided as an example embodiment.

First, a step of (a) for obtaining a first solution by dissolving dispersing agent and reducing agent into a first solvent may be provided.

Herein, the dispersing agent may contain one or more substances selected from a group of PVP(Polyvinylpyrrolidone), Oleylamine, and CTAB, but it is not limited thereto. Also, the reducing agent may contain one or more substances selected from a group of NaBH₄ (Sodium Borohydride), Butyllithium, and Ascorbic Acid, but it is not limited thereto.

Next, a step of (b) for synthesizing the Au-Pt alloy by adding Au precursor and Pt precursor into the first solution may be provided.

Herein, the step of (b) includes steps of: (b-1) obtaining a second solution by dissolving the Au precursor and the Pt precursor into a second solvent, and (b-2) synthesizing the Au-Pt alloy by adding the second solution into the first solution.

Herein, the first and second solvent respectively used to obtain the first solution and the second solution may contain deionized water, but it is not limited thereto.

Meanwhile, the second solution may be allowed to be dropped into the first solution. Herein, the step of (b) may be carried out at a temperature near 0°C. For example, the first solution may be in the ice-water bath and then the second solution is added into the first solution.

Also, a step of (c) for washing the Au-Pt alloy synthesized at the step of (b) may be provided, but it is not limited thereto.

In accordance with the present disclosure, there is provided methods for forming the solid solution of the Au(Aurum, i.e. gold) and the Pt(Platinum), which have originally immiscible properties. The synthesized Au-Pt alloy may catalyze the direct synthesis reaction of the hydrogen peroxide. Herein, the explanation on the catalyst characteristics and the activity of the Au-Pt catalyst will be omitted not to make repetition.

In detail, a method for synthesizing the Au-Pt alloy may include steps of: (a) obtaining the first solution by dissolving 0.153g of the PVP and 0.012g of the NaBH4 into 15mL of the deionized water, and (b) obtaining the second solution by dissolving 0.01mml of metallic precursor containing the Au precursor and the Pt precursor into 5mL of the deionized water. Herein, a mol ratio of the two dissolved metallic atoms(Au:Pt) may be from 10:90 to 95:5, but it is not limited thereto.

Next, the second solution may be allowed to be dropped into the first solution in the ice-water bath, and the final outcome may be acquired by washing the obtained Au-Pt nanoparticles three times in the deionized water at 10,000 rpm.

The above-mentioned values and conditions are to show and describe the method for preparing the Au-Pt catalyst in accordance with the present disclosure, but it is not limited thereto. Also, the values and conditions may be appreciated by those skilled in the art that various changes and modifications may be made.

Next, a method for synthesizing the hydrogen peroxide by using the Au-Pt catalyst may be provided as an example embodiment. More particularly, the Au-Pt catalyst may contain the Au-Pt alloy which is a mixture of Au(Aurum, i.e. gold) and Pt(Platinum). Herein, the explanation on the catalyst characteristics and the activity of the Au-Pt catalyst will be omitted not to make repetition.

The method for synthesizing the hydrogen peroxide of the present disclosure can replace the conventional Pd catalyst for the direct synthesis of the hydrogen peroxide with the Au-Pt catalyst which exhibits higher activity than the Pd catalyst. Also, it is expected to be possible to meet the demand for the hydrogen peroxide with an eco-friendly synthesizing process by replacing the conventional inefficient indirect synthesizing process of the hydrogen peroxide with the Au-Pt catalyst.

Meanwhile, in accordance with another example embodiment of the present disclosure, the Au-Pt alloy may be carried in a certain catalyst support. Also, the Au-Pt catalyst may further include a certain substance, e.g., one or more other metals or alloys for catalyzing the direct synthesis reaction of the hydrogen peroxide.

In accordance with the present disclosure, there is an effect of replacing the palladium(Pd) catalyst with the new high-active catalyst.

In accordance with the present disclosure, there is another effect of providing the solid solution of the Au(Aurum, i.e. gold) and the Pt(Platinum), which have originally immiscible properties, and providing a method for preparing the solid solution.

In accordance with the present disclosure, there is still another effect of providing methods for synthesizing of the hydrogen peroxide by using the new catalyst.

As seen above, the present disclosure has been specifically described by such matters as detailed components, limited embodiments, and drawings. While the disclosure has been shown and described with respect to the preferred embodiments, it, however, may be appreciated by those skilled in the art that various changes and modifications may be made without departing from the spirit and the scope of the present disclosure as defined in the following claims.

Accordingly, the thought of the present disclosure must not be confined to the explained preferred or example embodiments, and the following patent claims as well as everything including variations equal or equivalent to the patent claims pertain to the category of the thought of the present disclosure.

## Claims

1. A catalyst, containing: an alloy of two elements, wherein the elements are Au(Aurum, i.e. gold) and Pt(Platinum).

2. The catalyst of Claim 1, wherein the alloy forms solid solution.

3. The catalyst of Claim 1, wherein the alloy has a face-centered tetragonal structure.

4. The catalyst of Claim 1, wherein the alloy catalyzes direct synthesis reaction of hydrogen peroxide (H₂O₂).

5. The catalyst of Claim 1, wherein a molecular formula of the alloy is represented as Au_{X}Pt_{(100-X)}, and wherein the X satisfies no less than 22 and no more than 97.

6. The catalyst of Claim 1, wherein a molecular formula of the alloy is represented as Au_{X}Pt_{(100-X)}, and wherein the X satisfies no less than 27 and no more than 97.

7. A method for preparing a catalyst containing an Au-Pt alloy, comprising steps of:
(a) obtaining a first solution by dissolving dispersing agent and reducing agent into a first solvent; and
(b) synthesizing the Au-Pt alloy by adding Au precursor and Pt precursor into the first solution.

8. The method of Claim 7, wherein the step (b) includes steps of:
(b-1) obtaining a second solution by dissolving the Au precursor and the Pt precursor into a second solvent; and
(b-2) synthesizing the Au-Pt alloy by adding the second solution into the first solution.

9. The method of Claim 8, wherein, at the step of (b-2), the second solution is allowed to be dropped into the first solution.

10. The method of Claim 7, wherein the step (b) is carried out at a temperature near 0°C.

11. The method of Claim 7, wherein the reducing agent contains one or more substances selected from a group of NaBH₄ (Sodium Borohydride), Butyllithium, and Ascorbic Acid.

12. The method of Claim 7, wherein the dispersing agent contains one or more substances selected from a group of PVP(Polyvinylpyrrolidone), Oleylamine, and CTAB.

13. The method of Claim 7, wherein the Au-Pt alloy forms solid solution.

14. The method of Claim 7, wherein the Au-Pt alloy catalyzes direct synthesis reaction of hydrogen peroxide (H₂O₂).

15. The method of Claim 7, further comprises a step of: (c) washing the Au-Pt alloy synthesized at the step of (b).

16. A method for synthesizing hydrogen peroxide, wherein the hydrogen peroxide is synthesized by using an Au-Pt catalyst.
